# EUROPÄISCHE PATENTSCHRIFT

(11) **EP 1 113 944 B1**
(45) Veröffentlichungstag und Bekanntmachung des Hinweises auf die Patenterteilung: **27.08.2003**
(21) Anmeldenummer: 99968654.6
(22) Anmeldetag: 07.09.1999
(51) Int. Cl.: B60M 1/30

(54) **VERBUNDPROFIL**
COMPOSITE PROFILED SECTION
PROFILE COMPOSITE

(30) Priorität: 07.09.1998 DE 19840720
(43) Veröffentlichungstag der Anmeldung: 11.07.2001
(73) Patentinhaber: Glück, Joachim, 78713 Schramberg-Sulgen (DE)
(72) Erfinder: Glück, Joachim, 78713 Schramberg-Sulgen (DE)
(74) Vertreter: Weiss, Peter, Dr.
(86) Internationale Anmeldenummer: DE9902887
(87) Internationale Veröffentlichungsnummer: WO00013930

(56) Entgegenhaltungen:
- DE-A- 2 546 026
- FR-A- 2 171 665
- GB-A- 493 745
- PATENT ABSTRACTS OF JAPAN vol. 10, no. 109 (M-472) [2166], 23. April 1986 (1986-04-23) & JP 60 240534 A (HITACHI DENSEN K.K.), 29. November 1985 (1985-11-29)
- PATENT ABSTRACTS OF JAPAN vol. 18, no. 569 (M-1695), 31. Oktober 1994 (1994-10-31) & JP 06 206482 A (HITACHI CABLE LTD), 26. Juli 1994 (1994-07-26)

## Beschreibung

Die Erfindung betrifft ein Verbundprofil mit einem Basisprofil aus einem elektrisch gut leitenden Werkstoff und wenigstens einer mit dem Basisprofil verbundenen Oberflächenbeschichtung aus einem höher abriebfestem Werkstoff, insbesondere einem Verschleißband aus Metall, sowie ein Verfahren zur Herstellung eines Verbundprofils.

Erfindungsgemäße Verbundprofile werden meist als Stromschienen zur Elektrifizierung von schienengebundenen Fahrzeugen verwendet. Der Strom wird mittels Stromabnehmern schleifend an einer Oberfläche der Stromschiene abgenommen. Da das weiche Aluminium eine sehr schlechte Abriebfestigkeit aufweist, bildet ein hoch abriebfestes Edelstahlband die beschliffene Oberfläche aus, welches mit dem Basisprofil elektrische gut leitend verbunden ist.

Für die Herstellung von Stromschienen mit 4,5 - 6 mm oder dickeren Verschleißbändern aus Edelstahl haben sich derzeit nur zwei nachfolgend beschriebene Verfahren als wirtschaftlich erwiesen.

Der DE-PS 24 32 541 ist ein Verfahren zum Herstellen von Stromschienen aus einem Trägerprofil und mindestens einer wenigstens ein Teil der Oberfläche des Trägerprofils bildenden Auflage aus Profilband eines anderen Metalls zu entnehmen.

Während eines Strangpreßvorganges wird das Trägerprofil durch Auspressen eines Aluminiumbolzens durch den Formgebungsquerschnitt einer Preßmatrize erzeugt. Zwischen dem Trägerprofil und dem Profilband entsteht beim Strangpressen eine innige metallische Schweißverbindung.

Treten im Betrieb extrem hohe Belastungen auf den Verbund auf, so können diese zu einem Bruch der Verbindung führen, ohne daß dies äußerlich sichtbar wird. Das Verbundprofil muß daher routinemäßig aufwendig mittels Ultraschall oder ähnlichen Verfahren auf Ablösungen überprüft werden. Diesen Nachteil haben Verbundprofile mit einer mechanischen oder formschlüssigen Verbindung zwischen beiden Profilen nicht.

Das Patent GB 2 231 544 zeigt eine Möglichkeit der mechanischen Verbindung zwischen einem Basisprofil aus Aluminium und einem Stahlband, indem das Stahlband eine Schulter des Basisprofil beidseitig umfaßt. Das Stahlband hält aufgrund der formschlüssigen Umklammerung der Profilschulter des Basisprofil durch die nach innen zurückgebogenen kurzen Schenkel des geschweißten Stahlbandes.

Mit zunehmendem Abrieb des Stahlbandes verliert die Umklammerung jedoch an Stabilität und das Stahlband läßt sich mit geringer Kraft vom Basisprofil abziehen.

Nach der US 5,161,667 ist bekannt, daß ein Verschleißband über die Längskanten des Basisprofils nach unten gebogen und in vorhandene Längsnuten des Basisprofils eingesetzt oder eingerollt wird.

Diese Art der Montage eignet sich nur für relativ dünne Verschleißbänder von max. 2 - 3 mm.

Ein Verbundprofil mit einem Basisprofil aus einem elektrisch gut leitenden Werkstoff und einer mit dem Basisprofil verbundenen Oberflächenbeschichtung aus einem höher abriebfesten Werkstoff ist aus der DE-A 25 46 026 bekannt. Dort erfolgt die Verbindung zwischen Metallbelag und Aluminiumprofil dadurch, dass die Ränder des Metallbelages in das leitfähige Aluminiumprofil eingeklemmt werden, wobei die Einkerbungen in dem Metallbelag eine bei der Verbindungsherstellung entstandene Verformung sind.

In Kenntnis dieses Standes der Technik hat sich der Erfinder das Ziel gesetzt, die Verbindung zwischen Basisprofil und Verschleißband gegenüber den obigen Verfahren zu verbessern und insbesondere ein Verfahren bereitzustellen, mit dessen Hilfe Verschleißbänder mit mindestens 6 mm Banddicke mit sicherer Verbindung zum Basisprofil befestigt werden können.

Zur Lösung dieser Aufgabe führt, daß das Verschleißband an zumindest einer seiner Länskanten Ausnehmungen aufweist, welche mittels eines Verbindungswerkstoffes oder Verbindungsprofils zumindest teilweise verfüllt und dadurch mit dem Basisprofil kraft- und/oder formschlüssig verbunden sind.

In die Ausnehmungen werden von außen separate Verbindungsprofile (Verstemmleisten) eingesteckt und mit dem Basisprofil verstemmt oder Material eines mit dem Basisprofil verbundenen Profilschenkel eingedrückt und zumindest teilweise verfüllt, so daß das Verschleißband mit dem Basisprofil kraft- und formschlüssig verbunden wird.

So werden bspw. beidseitig vom Basisprofil abstehende Profilschenkel nach Aufsetzen des Verschleißbandes seitlich gegen die Längskanten des Profilbandes angedrückt. Mit stempelartigen Stemmeisen oder Ausformungen am Reif einer Stemmrolle wird zusätzlich Material der Profilschenkel in die Ausnehmungen des Verschleißbandes hinein gedrückt und verstemmt, so daß äußerlich eine Delle oder Verstemmabdruck im Profilschenkel erkennbar wird. Die Ausnehmungen des Stahlbandes werden hierdurch zumindest teilweise verfüllt.

Von besonderem Vorteil ist, daß durch die vorgefertigte Ausnehmungen des Verschleißbandes, in der Regel ein Stahlband, dieses nicht eingedellt oder Stahl verdrängt werden muß. Die plastische Verformung erfolgt überwiegend in den Schenkeln des Basisprofils aus in der Regel weichem Aluminium, wodurch relativ geringe Verstemmkräfte erforderlich sind. Durch die variable Länge der Ausnehmungen und der dazwischen liegenden Verbindungsstege des Stahlbandes kann ein Gleichgewicht zwischen dem Abreißen der schmalen Verbindungsstege und dem Abreißen oder Ausreißen der Profilschenkel hergestellt werden. Hierdurch wird die Ausreißkraft des Verschleißbandes auf ein Maximum optimiert.

Des weiteren erfolgt die plastische Verformung der Schenkel des Basisprofil in die Ausnehmungen des Stahlbandes unter Ausbildung einer großen Kontaktfläche und hohem Kontaktdruck. Es hat sich gezeigt, daß der elektrischen Übergangswiderstand durch besagtes Verfahren wesentlich geringer ist, als bei den bisherigen Ausführungen.

In einer weiteren Ausführungsform weist das Basisprofil Profilschultern auf. Das Verschleißband wird beim seitlichen Anpressen der Profilschenkel um die Profilschultern gebogen, so daß das Stahlband das Basisprofil zusätzlich umfaßt. Der Vorteil ist, daß das Stahlband den Profilkopf seitlich zumindest teilweise umfaßt.

In einer anderen Ausführungsform weist das Basisprofil einseitig oder beidseitig Längsnuten zur Befestigung mindestens eines weiteren Verbindungsprofils auf. Das Verbindungsprofil ist vorzugsweise aus dem gleichen Werkstoff wie das Basisprofil. Ein Verbindungsprofil wird mittels Stemmeisen sowohl in die Längsnut des Basisprofils als auch in die Ausnehmungen des Verschleißbandes verstemmt.

In einer bevorzugten Form befindet sich die Längsnut des Basisprofils in Höhe hinter den Ausnehmungen des Stahlbandes. Das Verbindungsprofil weist in diesem Fall im Abstand und Form den Ausnehmungen des Stahlbandes entsprechende Verstemmzungen auf, die über einen Kopf des Verbindungsprofil miteinander verbunden sind. Die Verstemmzungen des Verbindungsprofil werden bspw. mittels Rollen von außen durch die Ausnehmungen des Stahlbandes in die Längsnut des Basisprofil eingepreßt.

Es ist weiterhin möglich, mit Hilfe jedes Profilschenkels am Basisprofils einen Trog auszubilden, vorzugsweise mit einer dem Profilschenkel gegenüberliegenden hinterschnittenen Längsnut im Basisprofil, so daß durch die Ausformungen im Verschleißband eine rückseitige und durchgehende Verfüllung durch ein fließfähiges Drittmaterial, z.B. geschmolzenes Metall oder Kunststoff, erfolgen kann. Bei Verwendung eines thermoplastischen Materials ist es möglich, nach Abnutzung des Verschleißbandes die Verfüllung aufzuweichen und Bandkanten des verbliebenen Verschleißbandes wieder leicht aus dem Basisprofil zu lösen.

Vorteil der Gesamtlösung ist es, daß das Stahlband bzw. Teile des Stahlbandes bis zum vollständigen Abrieb mit der anfänglichen Verbindungskraft mit dem Basisprofil verbunden bleiben und daß die Verbindung von außen visuell überprüft und beurteilt werden kann. Damit ist ein wesentlicher Sicherheitsgewinn bei der Nutzung erreicht.

Weitere Vorteile, Merkmale und Einzelheiten der Erfindung ergeben sich aus der nachfolgenden Beschreibung bevorzugter Ausführungsbeispiele, sowie anhand der Zeichnung; diese zeigt in
Figur 1 einen Querschnitt einer Stromschiene;
Figur 2 eine perspektivische Darstellung eines erfindungsgemäßen Verschleißbandes;
Figur 3 eine perspektivische Darstellung eines Stromschienen Abschnitts;
Figur 4 einen Querschnitt eines weiteren Ausführungsbeispiels einer Stromschiene;
Figuren 5 - 7 teilweise dargestellte Querschnitte von Ausführungen der Verbindung zwischen Basisprofil und Verschleißband;
Figur 8 einen Querschnitt durch eine Stromschiene mit verschieden geformter Ausnehmungen des Stahlband;
Figur 9 einen Querschnitt einer weiteren Ausführung der Verbindung zwischen Basisprofil und Verschleißband;
Figur 10 eine perspektivische Darstellung vor Ausführung der Verbindung;
Figur 11 eine perspektivische Darstellung eines Verbindungsprofils;

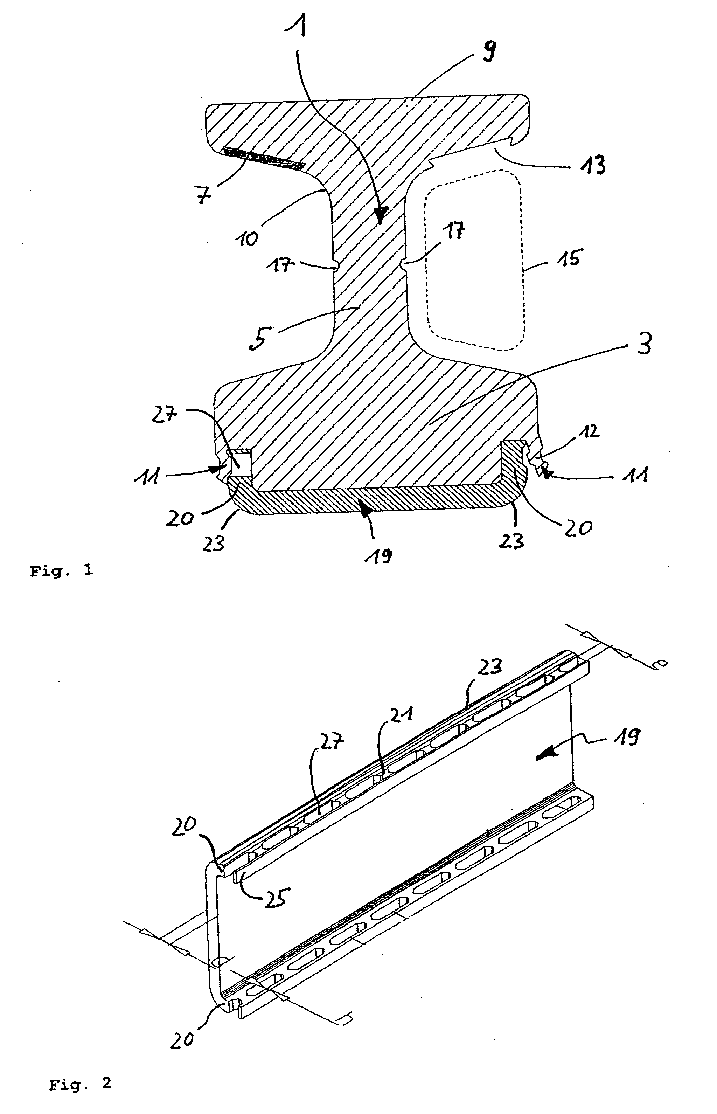

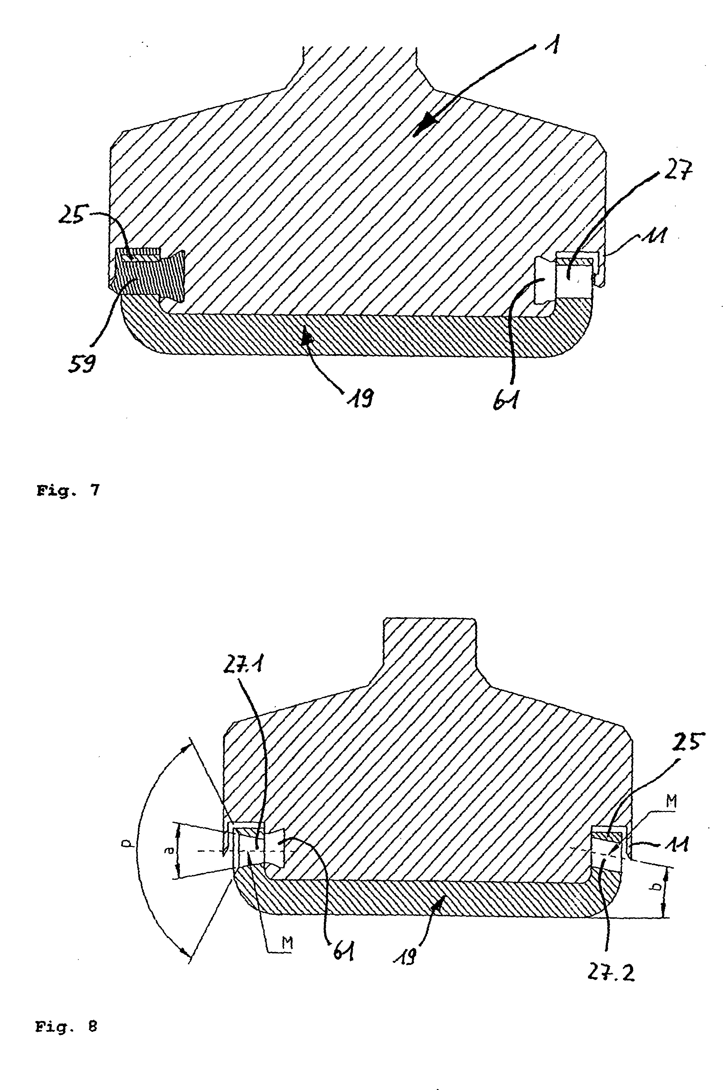

**Figur 1** zeigt ein erfindungsgemäßes Verbundprofil als Stromschiene. Die Stromschiene wird von Stromabnehmern auf einem Schienenkopf 3 beschliffen. Die Stromschiene besteht aus einem Basisprofil 1 aus in der Regel elektrisch gut leitfähigem Aluminium, im wesentlichen gebildet aus dem Schienenkopf 3, einem Profiltaschen 15 ausbildenden und Rillen 17 aufweisenden Profilsteg 5 und Schienenfuß 9, und einem hoch abriebfesten Verschleißband 19, in der Regel ein Edelstahlband. Das Stahlband 19 weist zu beiden Längskanten über Abkantungen 23, die Stahlbandschenkel 20, auf. In den Stahlbandschenkeln 20 befinden sich Ausnehmungen 27 mit einer Breite e. Durch Anpressen von Profilschenkeln 11, ggf. mit einer Profilschenkelnase 63 (siehe Figur 7) und/oder einer Querstufung 12 gegen das Stahlband 19 und Verstemmen von Teilen der Profilschenkel 11 in die Ausnehmungen 27 der Stahlbandschenkel 20 wird das Stahlband 19 vom Basisprofil 1 kraftschlüssig und formschlüssig gehalten.

Das Verbundprofil weist zu beiden Innenseiten 10 des Schienenfußes 9 ein Gleitband 7 auf. Dazu weist das Basisprofil 1 beidseitig eine Profileinformung 13 im Schienenfuß 9 auf.

**Figur 2** zeigt das Stahlband 19 der Stromschiene von Figur 1 in perspektivischer Darstellung. Die beiden Stahlbandschenkel 20 weisen Ausnehmungen 27 auf. Vorzugsweise sind die Ausnehmungen 27 länger als die Breite von dazwischen liegenden Verbindungsstegen 21. In einer besonderen Ausführungsform sind die Verbindungsstege 21 zusätzlich dünner als die Dicke d des Stahlbandes 19 ausgeführt. Dadurch bildet sich ein Randabschluß, die Ankerleiste 25 mit einer Höhe h, der wiederum dicker wird. Der Randabschluß liegt im wesentlichen wie ein Anker im Basisprofil 1 und ist mit Material des Profilschenkel 20 umstemmt und fest eingebettet.

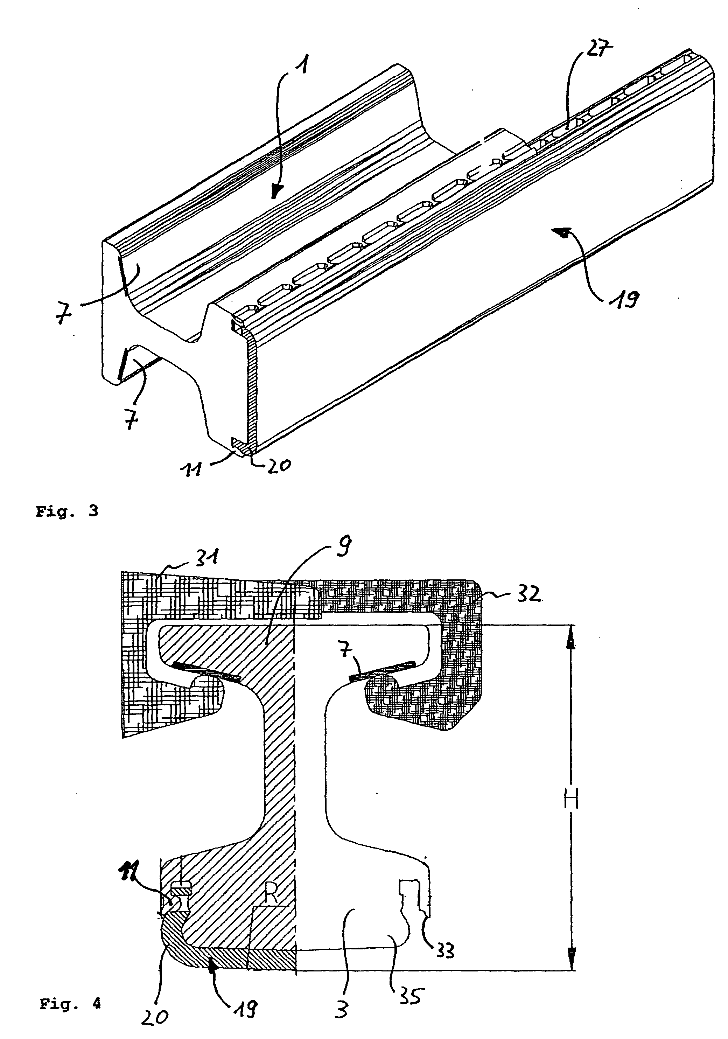

**Figur 3** zeigt eine dreidimensionale Ansicht eines kurzen Abschnitts einer Stromschiene nach Montage des Stahlbandes 19. Mittels zu den Ausnehmungen 27 formähnlicher Stemmeisen wird Material des Profilschenkels 11 in die Ausnehmungen 27 des Stahlbandes 19 seitlich eingedrückt und zumindest ein Teil der Ausnehmungen 27 dadurch verfüllt.

**Figur 4** zeigt schematisch, wie eine Stromschiene kopfunten in Stromschienenaufhängungen 31, 32 hängt und eine Höhe H aufweist.

Beim Anpressen und Verstemmen der Profilschenkel 11 gegen das Stahlband 19 wird dieses um eine Profilschulter 35 gebogen und umfaßt seitliche den Schienenkopf 3.

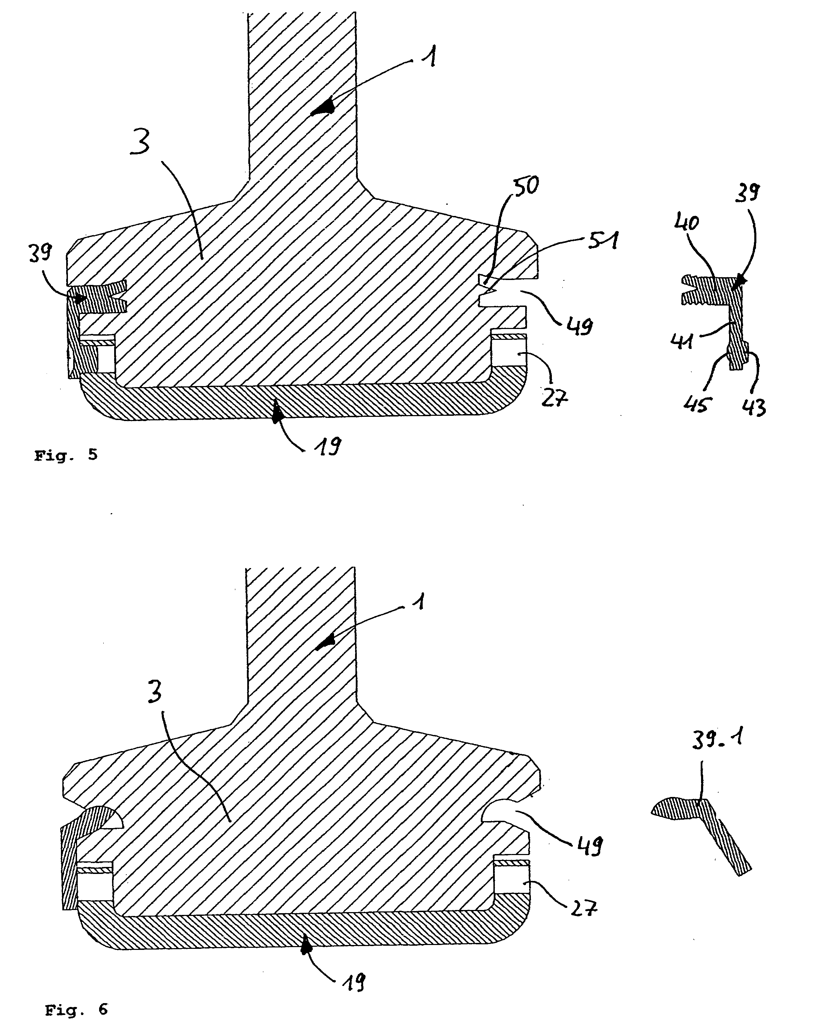

**Figur 5** zeigt schematisch die Montage des Stahlbandes 19 mittels Verbindungsprofilen 39. Verbindungsprofile 39 weisen einen Korpus 40 auf. Dieser wird in Einsatznuten 49 hinein gedrückt und darin mittels Stemmeisen von außen verstemmt. Ein Spreizsockel 51 am Nutgrund 50 der Einsatznut 49 spreizt die beiden Schenkel am Korpus 40 des Verbindungsprofils 39, wodurch das Verbindungsprofil 39 gegen Lockern oder Lösen vom Basisprofil 1 gesichert ist. Eine Wellung oder dreieckförmige Zahnung oder dergleichen an der Oberfläche des Korpus 40 verbessert die Ausreißfestigkeit zusätzlich.

Die Schenkel 41 des Verbindungsprofils werden wiederum gegen die Ausnehmungen 27 des Stahlbandes 19 verstemmt. Vorzugsweise weist der Schenkel 41 einseitig oder beidseitig eine Verdickung 43, 45 auf. Dadurch kann mehr Material in die Ausnehmungen verdrückt und die Ausreißkraft erhöht werden.

Verbindungsprofile 39.1 können gemäß **Figur 6** auch nur eingerastet oder ins Basisprofil 1 eingeklinkt werden.

In einem weiteren Ausführungsbeispiel gemäß **Figur 7** weist das Basisprofil 1 hinter den Ausnehmungen 27 des Stahlbandes 19 Füllausnehmungen 61 auf. Von Außen wird ein fließfähiges Füllmaterial oder Verbindungsmaterial 59 in die Ausnehmungen 27 und Füllausnehmungen 61 gepreßt.

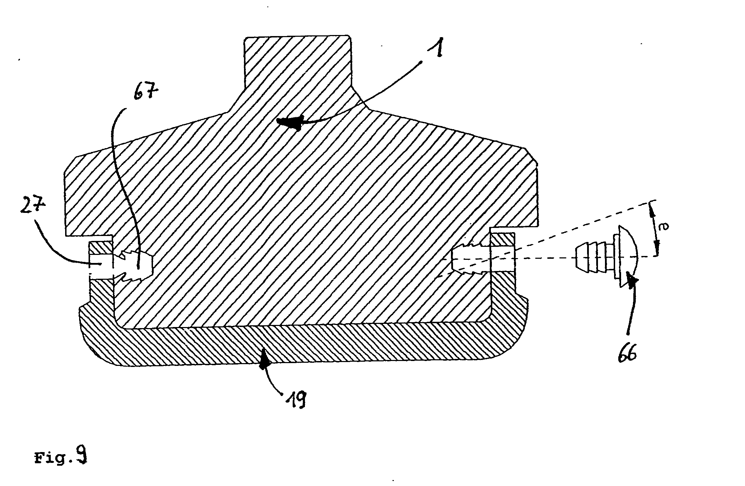

Die Füllausnehmungen 61 sind vorzugsweise konisch zum Nutgrund breiter oder weisen Hinterschneidungen auf. Die Ausnehmungen 27 des Stahlbandes 19 bzw. deren Mittelachse M weisen ihrerseits vorzugsweise ebenfalls eine konische Ausformung mit einem Winkel a (siehe Figur 8) oder eine Schrägstellung mit einem Winkel b auf. Ferner können die Ausnehmungen 27 auch eine trichterförmige Phase mit einem Winkel p aufweisen.

Nach Aushärten des Verbindungsmaterials 59 ist das Stahlband 19 formschlüssig mit dem Basisprofil 1 verbunden.

**Figur 8** zeigt bevorzugte Ausführungen der Ausnehmungen 27.1 und 27.2 des Stahlbandes 19, wie sie in Figur 7 erwähnt sind.

In der erfindungsgemäßen Ausführung gemäß **Figur 9** weist das Basisprofil 1 eine Verstemmnut 67 auf. Durch die Ausnehmungen 27 des Stahlbandes werden Verbindungselemente 66, wie Bolzen, Schrauben, etc. oder Verbindungsprofile in die Verstemmnut gepreßt oder verschraubt oder sonst geeignet verbunden.

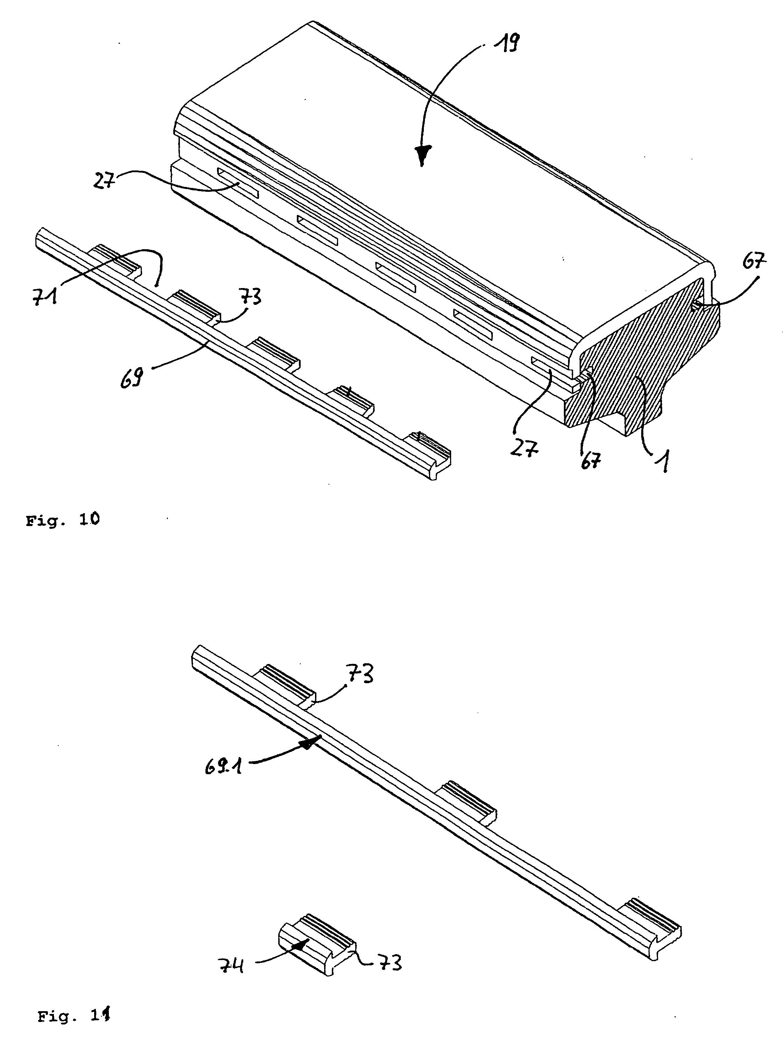

In einem besonderen Ausführungsbeispiel gemäß **Figur 10** wird das Stahlband 19 mittels einem Verbindungsprofil 69 mit dem Basisprofil 1 befestigt. Das Verbindungsprofil 69, zum Beispiel ein Strangpreßprofil aus Aluminium, weist in diesem Fall äquidistante Ausnehmungen 71 auf. Dadurch verbleiben Verstemmzungen 73 am Verbindungsprofil 69, die in die Ausnehmungen 27 des Stahlbandes eingeführt und in die Verstemmnut 67 des Basisprofils 1 gestemmt werden.

**Figur 11** zeigt ein Verbindungsprofil 69.1, bei welchem jede zweite Verstemmzunge 73 fehlt. Denkbar ist auch, nur einzelne Nutkeile 74 zu verstemmen.

## Patentansprüche

1. Verbundprofil mit einem Basisprofil (1) aus einem elektrisch gut leitenden Werkstoff und wenigstens einer mit dem Basisprofil verbundenen Oberflächenbeschichtung aus einem höher abriebfestem Werkstoff, insbesondere einem Verschleissband (19) aus Metall,
**dadurch gekennzeichnet,**
**dass** das Verschleissband (19) an zumindest einer seiner Längskanten (23) Ausnehmungen (27) aufweist, welche mittels eines Verbindungswerkstoffes (59) oder Verbindungsprofils (11, 39, 66, 69, 74) zumindest teilweise verfüllt und dadurch mit dem Basisprofil (1) kraft- und/oder formschlüssig verbunden sind.

2. Verbundprofil nach Anspruch 1, **dadurch gekennzeichnet, dass** die Ausnehmungen (27) randseitig eine Ankerleiste (25) mit einer Höhe (h) definieren.

3. Verbundprofil nach wenigstens einem der Ansprüche 1 und 2, **dadurch gekennzeichnet, dass** das Basisprofil (1) und/oder das Verbindungsprofil (39) Profilschenkel (11, 41) zu mindestens einer Seite des Schienenkopfes (3) aufweist, die die Ausnehmungen (27) zumindest teilweise überdecken.

4. Verbundprofil nach Anspruch 3, **dadurch gekennzeichnet, dass** der Profilschenkel (11, 41) eine äussere Profilverdickung (43) oder eine innere Profilverdickung (45) aufweist.

5. Verbundprofil nach wenigstens einem der Ansprüche 1 bis 4, **dadurch gekennzeichnet, dass** das Basisprofil (1) eine Einsatznut (49) für ein Verbindungsprofil (39) aufweist.

6. Verbundprofil nach wenigstens einem der Ansprüche 1 bis 5, **dadurch gekennzeichnet, dass** das Basisprofil (1) eine Füllausnehmung (61) oder Verstemmnut (67) im wesentlichen hinter den Ausnehmungen (27) der Stahlbandschenkel (20) aufweist.

7. Verbundprofil nach Anspruch 6, **dadurch gekennzeichnet, dass** die Füllausnehmungen (61) oder Verstemmnuten (67) eine widerhakenartige Innenausformung (68) der Innenflächen aufweisen.

8. Verfahren zur Herstellung eines Verbundprofil mit einem Basisprofil (1) aus einem elektrisch gut leitenden Werkstoff und wenigstens einer mit dem Basisprofil (1) verbundenen Oberflächenbeschichtung aus einem höher abriebfestem Werkstoff, insbesondere einem Verschleissband (19) aus Edelstahl, unter Erzeugung einer mechanischen und formschlüssigen Verbindung, insbesondere zur Herstellung von Verbundprofilen nach wenigstens einem der Ansprüche 1-7, **dadurch gekennzeichnet, dass** ein Verbindungswerkstoff (59) oder Material eines Verbindungsprofils (11, 39, 66, 69, 74) mechanisch von aussen in Ausnehmungen (27) eingebracht wird und eine mechanisch formschlüssige, stoffliche Verbindung zwischen Basisprofil (1) und Verschleissband (19) erzeugt.

9. Verfahren nach Anspruch 8, **dadurch gekennzeichnet, dass** die Montage des Stahlbandes (19) mittels Verstemmleisten (69) oder Nutkeilen (74) erfolgt, indem Verstemmzungen (73) durch die Ausnehmungen (27) des Stahlbandes (19) in Verstemmnuten (67) des Basisprofils (1) eingepresst und/oder darin verstemmt werden.

10. Verfahren nach Anspruch 8, **dadurch gekennzeichnet, dass** die Montage des Stahlbandes (19) mittels Nieten, Schrauben oder diesen ähnlichen Verbindungselementen erfolgt, indem diese durch die Ausnehmungen (27) in die Verstemmnut (67) des Basisprofils (1) eingeschlagen, verschraubt oder mit der entsprechenden Verbindungstechnik verbunden werden.

11. Verfahren nach Anspruch 8, **dadurch gekennzeichnet, dass** Profilschenkel (11) des Schienenkopfes (3) oder Schenkel (41) von separaten Verbindungsprofilen (39) von aussen gegen die Stahlbandschenkel (20) gepresst und dabei plastisch verformt werden.

12. Verfahren nach Anspruch 8, **dadurch gekennzeichnet, dass** mittels Verstemmeisen Material des Profilschenkels (11) unter plastischer Verformung in die Ausnehmungen (27) des Stahlbandes verstemmt wird.

13. Verfahren nach Anspruch 8, **dadurch gekennzeichnet, dass** das verstemmte Material der Profilschenkel (11) die Ausnehmungen (27) zumindest teilweise verfüllen.

## Claims

1. Composite profile, having a base profile (1) formed from a material with good electrical conductivity and at least one surface coating, which is connected to the base profile and formed from a material which is more highly resistant to abrasion, more especially a wear strip (19) formed from metal, **characterised in that** the wear strip (19) has recesses (27) on at least one of its longitudinal edges (23), which recesses are at least partially filled by means of a connecting material (59) or connecting profile (11, 39, 66, 69, 74) and are thereby connected to the base profile (1) in a force- and/or form-fitting manner.

2. Composite profile according to claim 1, **characterised in that** the recesses (27) define, on the edge side, an armature bar (25) with a height (h).

3. Composite profile according to at least one of claims 1 and 2, **characterised in that** the base profile (1) and/or the connecting profile (39) have or has profile portions (11, 41), which at least partially cover the recesses (27), on at least one side of the rail head (3).

4. Composite profile according to claim 3, **characterised in that** the profile portion (11, 41) has an external profile thickening (43) or an internal profile thickening (45).

5. Composite profile according to at least one of claims 1 to 4, **characterised in that** the base profile (1) has an insert groove (49) for a connecting profile (39).

6. Composite profile according to at least one of claims 1 to 5, **characterised in that** the base profile (1) has a filler recess (61) or caulking groove (67) substantially behind the recesses (27) of the steel strip portion (20).

7. Composite profile according to claim 6, **characterised in that** the internal faces of the filler recesses (61) or caulking grooves (67) have a barb-like internal configuration (68).

8. Method of producing a composite profile, having a base profile (1) formed from a material with good electrical conductivity and at least one surface coating, which is connected to the base profile (1) and formed from a material which is more highly resistant to abrasion, more especially a wear strip (19) formed from stainless steel, thereby establishing a mechanical and form-fitting connection, more especially a method of producing composite profiles according to at least one of claims 1 - 7, **characterised in that** a connecting material (59) or material of a connecting profile (11, 39, 66, 69, 74) is introduced mechanically from outside into recesses (27) and establishes a mechanically form-fitting connection between the materials of the base profile (1) and wear strip (19).

9. Method according to claim 8, **characterised in that** the assembly of the steel strip (19) is effected by means of caulking bars (69) or groove wedges (74), caulking projections (73) being pressed by the recesses (27) of the steel strip (19) into caulking grooves (67) of the base profile (1) and/or being caulked therein.

10. Method according to claim 8, **characterised in that** the assembly of the steel strip (19) is effected by means of rivets, screws or connecting elements similar thereto, these connecting elements being forced by the recesses (27) into the caulking groove (67) of the base profile (1), being screw-connected or being connected by the appropriate connection technique.

11. Method according to claim 8, **characterised in that** profile portions (11) of the rail head (3) or portions (41) of separate connecting profiles (39) are pressed from outside against the steel strip portions (20) and are plastically deformed thereby.

12. Method according to claim 8, **characterised in that** material of the profile portion (11) is caulked by plastic deformation into the recesses (27) of the steel strip by means of caulking irons.

13. Method according to claim 8, **characterised in that** the caulked material of the profile portions (11) at least partially fills the recesses (27).

## Revendications

1. Profilé composite avec un profilé de base (1) en un bon matériau électroconducteur et au moins un revêtement de surface, en un matériau hautement résistant à l'abrasion, assemblé au profilé de base, en particulier une bande d'usure (19) en métal, **caractérisé par le fait que** la bande d'usure (19) présente, sur au moins l'un de ses bords longitudinaux (23), des évidements (27) qui sont, au moyen d'un matériau d'assemblage (59) ou d'un profilé d'assemblage (11, 39, 66, 69, 74), au moins partiellement remplis et, de ce fait, assemblés en liaison de force et/ou de forme avec le profilé de base (1).

2. Profilé composite selon la revendication 1, **caractérisé par le fait que** les évidements (27) définissent, du côté du bord, une bande d'ancrage (25) d'une hauteur (h).

3. Profilé composite selon au moins l'une des revendications 1 et 2, **caractérisé par le fait que** le profilé de base (1) et/ou le profilé d'assemblage (39) présente des branches (11, 41) au moins d'un côté de la tête de rail (3) qui recouvrent les évidements (27) au moins partiellement.

4. Profilé composite selon la revendication 3, **caractérisé par le fait que** la branche de profilé (11, 41) présente un épaississement de profilé extérieur (43) ou un épaississement de profilé intérieur (45).

5. Profilé composite selon l'une des revendications 1 à 4, **caractérisé par le fait que** le profilé de base (1) présente une rainure d'insertion (49) d'un profilé d'assemblage (39).

6. Profilé composite selon l'une des revendications 1 à 5, **caractérisé par le fait que** le profilé de base (1) présente un évidement de remplissage (61) ou une rainure de matage (67) sensiblement derrière les évidements (27) des branches de bande d'acier (20).

7. Profilé composite selon la revendication 6, **caractérisé par le fait que** les évidements de remplissage (61) ou les rainures de matage (67) présentent une déformation intérieure (68) en forme d'ardillon des faces intérieures.

8. Procédé de réalisation d'un profilé composite avec un profilé de base (1) en un bon matériau électroconducteur et au moins un revêtement de surface, en un matériau hautement résistant à l'abrasion, assemblé au profilé de base (1), en particulier une bande d'usure (19) en métal inoxydable, en réalisant un assemblage mécanique en liaison de forme, en particulier pour la réalisation de profilés composites selon au moins l'une des revendications 1 à 7, **caractérisé par le fait qu'**un matériau d'assemblage (59) ou un matériau de profilé d'assemblage (11, 39, 66, 69, 74) est introduit mécaniquement, de l'extérieur, dans des évidements (27) et réalise un assemblage matériel mécaniquement en liaison de forme entre le profilé de base (1) et la bande d'usure (19).

9. Procédé selon la revendication 8, **caractérisé par le fait que** le montage de la bande d'acier (19) s'effectue à l'aide de bandes de matage (69) ou de clavettes de rainure (74), en pressant des languettes de matage (73), à travers les évidements (27) de la bande d'acier (19), dans des rainures de matage (67) du profilé de base (1) et/ou en y matant ces dernières.

10. Procédé selon la revendication 8, **caractérisé par le fait que** le montage de la bande d'acier (19) s'effectue à l'aide de rivets, de vis ou d'éléments d'assemblage similaires à des derniers, en les insérant ou vissant, à travers les évidements (27), dans la rainure de matage (67) du profilé de base (1) ou en les assemblant par la technique d'assemblage appropriée.

11. Procédé selon la revendication 8, **caractérisé par le fait que** des branches de profilé (11) de la tête de rail (3) ou des branches (41) de profilés d'assemblage séparés (39) sont pressés, de l'extérieur, contre les branches de bande d'acier (20) et ainsi déformés plastiquement.

12. Procédé selon la revendication 8, **caractérisé par le fait que** du matériau de la branche de profilé (11) est maté, à l'aide de fers de matage, par déformation plastique dans les évidements (27) de la bande d'acier.

13. Procédé selon la revendication 8, **caractérisé par le fait que** le matériau maté des branches de profilé (11) remplit au moins partiellement les évidements (27).
